# EUROPÄISCHE PATENTANMELDUNG

(11) **EP 1 935 810 A1**
(43) Veröffentlichungstag der Anmeldung: **25.06.2008**
(21) Anmeldenummer: 07023402.6
(22) Anmeldetag: 04.12.2007
(51) Int. Cl.: B65D 90/00

(54) **Kuppelstück zum lösbaren Verbinden von Containern**

(30) Priorität: 20.12.2006 DE 102006060901
(71) Anmelder: MacGREGOR (DEU) GmbH, 20537 Hamburg (DE)
(72) Erfinder: Wielenberg, Johannes, 28816 Stuhr (DE); Geissenhöhner, Thomas, 21698 Brest (DE)
(74) Vertreter: Möller, Friedrich

(57) **Zusammenfassung**

Kuppelstücke zum Verbinden von Containern weisen mindestens ein Betätigungsmittel (12) zum Verdrehen eines Verriegelungsbolzens (11) auf. Bekannte Kuppelstücke müssen demontiert werden, um ein defektes oder verschlissenes Betätigungsmittel (12) auszutauschen.

Die Erfindung betrifft ein Kuppelstück, bei dem das mindestens eine Betätigungsmittel (12) lösbar mit dem Verriegelungsbolzen (11) verbunden ist. Dazu wird ein steckbares Haltemittel (41, 42) verwendet, das durch eine Öffnung (48) im Gehäuse (10) hindurch von der Außenseite des Gehäuses (10) zugänglich ist. Beim erfindungsgemäßen Kuppelstück kann dadurch das Betätigungsmittel (12) einfach und ohne ein Aufschrauben des Gehäuses (10) gewechselt werden.

## Beschreibung

Die Erfindung betrifft ein Kuppelstück zum lösbaren Verbinden von Containern, insbesondere an Bord von Schiffen, gemäß dem Oberbegriff des Anspruchs 1.

Kuppelstück der eingangs genannten Art werden im Fachjargon üblicherweise als "Twistlocks" bezeichnet. Diese Kuppelstücke werden vorwiegend eingesetzt, um an Bord von Schiffen zu transportierende Container miteinander zu verbinden. Dadurch sollen Relativverschiebungen der Container während des Schiffstransports verhindert werden.

Die Kuppelstücke verfügen über einen Verriegelungsbolzen, der Querriegel an seinen gegenüberliegenden Enden aufweist. Die Querriegel hintergreifen Langlöcher in den Eckbeschlägen der zu verbindenden Container. Zwischen den Querriegeln weist der Verriegelungsbolzen ein Mittelteil auf, womit der Verriegelungsbolzen verdrehbar in einem Gehäuse des Kuppelstücks gelagert ist. Verdreht wird der Verriegelungsbolzen mindestens zum Entriegeln des Kuppelstücks durch ein üblicherweise ein Seil aufweisendes Betätigungsmittel. Es sind aber auch Kuppelstück mit zwei solchen Betätigungsmitteln bekannt. Die Erfindung bezieht sich auf Kuppelstücke mit sowohl einem als auch zwei Betätigungsmitteln.

Es sind des Weiteren Kuppelstücke bekannt, deren Querriegel sowohl zum Verriegeln als auch zum Entriegeln durch Ziehen am jeweiligen Betätigungsmittel verdrehbar sind und auch solche, die automatisch verriegeln, so dass nur zum Entriegeln der Verriegelungsbolzen unter Zuhilfenahme des mindestens eines Betätigungsmittels verdreht wird. Bei den zuletzt genannten Kuppelstücken handelt es sich um halbautomatische Kuppelstücke, sogenannte Semiautomatik-Twistlocks. Die Erfindung eignet sich sowohl für halbautomatische Kuppelstücke als auch solche, die manuell ver- und entriegelt werden.

Bei den bekannten Kuppelstücken kommt es vor, dass die Betätigungsmittel reißen, insbesondere wenn sie nach längerem Einsatz verschlissen sind. Weil bei den bekannten Kuppelstücken die Betätigungsmittel fest mit dem Verriegelungsbolzen verbunden sind, muss das üblicherweise zweiteilige Gehäuse auseinandergebaut werden, um ein defektes Betätigungsmittel gegen ein neues auszutauschen. Anschließend muss die Verbindung des alten Betätigungsmittels mit dem Verriegelungsbolzen aufgeschnitten und eine Verbindung des neuen Betätigungsmittels mit dem Verriegelungsbolzen wieder hergestellt werden. Dadurch wird die Reparatur eines defekten Betätigungsmittels sehr aufwendig. Die Folge ist, dass üblicherweise das ein defektes Betätigungsmittel aufweisende Kuppelstück gegen ein neues Kuppelstück ausgetauscht wird.

Ausgehend vom Vorstehenden liegt der Erfindung die Aufgabe zugrunde, ein Kuppelstück zum lösbaren Verbinden von Containern zu schaffen, das einen einfachen Ersatz eines defekten Betätigungsmittels gegen ein neues zulässt.

Ein Kuppelstück zur Lösung dieser Aufgabe weist die Merkmale des Anspruchs 1 auf. Dadurch, dass das oder jedes Betätigungsmittel lösbar mit dem Verriegelungsbolzen verbunden ist, ist ein leichter Austausch eines defekten Betätigungsmittels gegen ein neues möglich. Insbesondere erübrigt sich das bei bekannten Kuppelstücken erforderliche Abtrennen des defekten Betätigungsmittels vom Verriegelungsbolzen und ein festes Verbinden des neuen Betätigungsmittels mit dem Verriegelungsbolzen. Die erfindungsgemäß lösbare Verbindung lässt es zu, das oder jedes Betätigungsmittel auszutauschen, ohne das alte Betätigungsmittel vom Verriegelungsbolzen abzutrennen und das neue Betätigungsmittel mit dem Verriegelungsbolzen wieder dauerhaft verbinden zu müssen.

Bevorzugt wird die lösbare Verbindung des jeweiligen Betätigungsmittels mit dem Verriegelungsbolzen unter Zuhilfenahme mindestens eines Haltemittels hergestellt. Das Haltemittel ermöglicht die lösbare Verbindung und hält diese bis zum nächsten Austausch des Betätigungsmittels zuverlässig aufrecht. Das Haltemittel ist lösbar mit dem Betätigungsmittel bzw. einem dieses haltenden Teil des Verriegelungsbolzens verbindbar, wobei das Haltemittel nach dem Zusammenfügen des Betätigungsmittels und des Verriegelungsbolzens die Verbindung zwischen beiden aufrechterhält, jedoch diese Verbindung durch Demontieren des Haltemittels leicht gelöst werden kann, ohne - wie bei bisher bekannten Kuppelstücken - die Verbindung des Betätigungsmittels mit dem Verriegelungsbolzen durch zerstörende Maßnahmen, wie beispielsweise Auftrennen, lösen zu müssen. Das Haltemittel wirkt praktisch wie ein Schloss, indem durch Abziehen des Haltemittels das Schloss geöffnet wird, wodurch im vorliegenden Falle das Betätigungsmittel vom Verriegelungsbolzen gelöst werden kann und bei eingestecktem Haltemittel das Schloss geschlossen wird, in dem Sinne, dass eine dauerhafte - aber lösbare - Verbindung des Betätigungsmittels mit dem Verriegelungsbolzen zustande kommt.

Bei Kuppelstücken mit mehreren, vorzugsweise zwei, Betätigungsmitteln ist zwischen dem Verriegelungsbolzen und jedem Betätigungsmittel ein lösbares Haltemittel angeordnet. Es ist so jedes Betätigungsmittel gezielt individuell vom Verriegelungsbolzen lösbar. Wenn ein Kuppelstück zwei Betätigungsmittel aufweist, brauchen bei einem defekten Betätigungsmittel nicht beide Betätigungsmittel gelöst und ausgetauscht zu werden.

Bevorzugt ist jedes Haltemittel rastend ausgebildet. Auf diese Weise kommt eine jederzeit leicht lösbare Steckverbindung zwischen dem jeweiligen Betätigungsmittel und dem Verriegelungsbolzen zustande.

Gemäß einer bevorzugten Weiterbildung der Erfindung ist vorgesehen, im Gehäuse des Kuppelstücks mindestens eine Öffnung anzuordnen, wodurch das Innere des Gehäuses zugänglich ist, um die Verbindung zwischen dem jeweiligen Betätigungsmittel und dem Verriegelungsbolzen herzustellen und zum Auswechseln eines defekten Betätigungsmittels zu lösen. Es muss demnach gemäß der Erfindung - anders als bei bekannten Kuppelstücken - das Gehäuse nicht geöffnet zu werden, um ein defektes Betätigungsmittel gegen ein neues auszutauschen. Im Normalfall reicht eine einzige Öffnung im Gehäuse, um die lösbare Verbindung zwischen jedem Betätigungsmittel und dem Verriegelungsbolzen herzustellen und zu lösen. Es ist auch denkbar, und zwar insbesondere bei Kuppelstücken mit mehreren Betätigungsmitteln, mehrere Öffnungen im Gehäuse vorzusehen. Diese mehreren Öffnungen können auch dazu dienen, die Verbindung zwischen dem jeweiligen Betätigungsmittel und dem Verriegelungsbolzen in verschiedenen Drehstellungen des Verriegelungsbolzens herzustellen und zu lösen.

Der Verriegelungsbolzen verfügt üblicherweise über ein drehbar im Gehäuse gelagertes und im Wesentlichen zylindrisches Mitteilteil. Dieses Mittelteil weist mindestens einen seitlich abstehenden, laschenartigen Vorsprung auf, an dem das oder jedes Betätigungsmittel befestigt ist. Im Vorsprung ist ein Durchbruch, vorzugsweise eine Durchgangsbohrung, angeordnet, durch die ein Ende des jeweiligen Betätigungsmittels hindurchgesteckt wird, und zwar zusammen mit mindestens einer Verdickung am Ende oder am Endbereich des Betätigungsmittels. Während bei bekannten Kuppelstücken die Verdickung erst hergestellt wird, nachdem das noch keine Verdickung aufweisende Ende des Betätigungsmittels durch den Durchbruch im Vorsprung am Verriegelungsbolzen hindurchgeschoben worden ist, sieht die Erfindung es vor, den Durchbruch so groß auszubilden, dass das Ende des Betätigungsmittels mit der darauf bereits befestigten Verdickung hindurchschiebbar ist. Hierdurch wird eine wesentliche Voraussetzung für die lösbare Verbindung des jeweiligen Betätigungsmittels mit dem Verriegelungsbolzen geschaffen, weil die mindestens eine Verdickung schon vor der Montage des Betätigungsmittels auf dem Endbereich desselben aufgebracht werden kann.

Gemäß einer bevorzugten Ausgestaltung der Erfindung korrespondiert die Verdickung des jeweiligen Betätigungsmittels mit dem Haltemittel derart, dass nach dem Montieren des Verbindungsmittels das Haltemittel das Herausziehen des Betätigungsmittels aus dem Vorsprung des Verriegelungsbolzens nicht mehr zulässt. Bei montiertem Haltemittel ist dadurch das Ende des Betätigungsmittels formschlüssig zumindest in Zugrichtung des Betätigungsmittels am Vorsprung des Verriegelungsbolzens arretiert und gesichert.

Bevorzugt ist das Haltemittel im montierten Zustand auf der jeweiligen Verdickung oder an der Verdickung des Betätigungsmittels festrastbar. Dadurch ist eine lösbare Verbindung des Betätigungsmittels mit dem Verriegelungsbolzen rasch ohne irgendwelche Werkzeuge herstellbar und genauso einfach wieder lösbar. Alternativ kann das Haltemittel auch auf den Vorsprung des Verriegelungsbolzens aufgesteckt werden.

Bei einer bevorzugten Ausgestaltung der Erfindung verfügt jedes Betätigungsmittel über mindestens eine Verdickung, die durch eine Presshülse auf dem Ende oder dem Endbereich eines vorzugsweise seilartigen Zugstrangs des Betätigungsmittels dauerhaft und unlösbar angebracht ist. Denkbar ist es aber auch, dass jeder Zugstrang im Endbereich zwei beabstandete Verdickungen aufweist, die jeweils als eine fest auf den Zugstrang aufgedrückte Presshülse ausgebildet sind. In diesem Fall kann eine zum Betätigungsende des Zugstrangs weisende Presshülse zur Führung des Zugstrangs in der Durchgangsbohrung des seitlich abstehenden Vorsprungs am Mittelteil des Verriegelungsbolzens dienen. Zwischen den benachbarten Presshülsen findet dann ein Teil des Haltemittels Aufnahme. Dadurch ist dieser Teil des Haltemittels unverschiebbar zwischen den Presshülsen auf dem Zugstrang gehalten.

Das Haltemittel weist nach einer bevorzugten Ausgestaltung der Erfindung eine einseitig offene, vorzugsweise geschlitzte Scheibe auf. Diese Scheibe verfügt über einen Außendurchmesser, der größer ist als der Durchmesser im Vorsprung des Verriegelungsbolzens, wodurch die Scheibe sich zwischen der vorzugsweise als Presshülse ausgebildeten Verdickung des Zugstrangs und dem abstehenden Vorsprung am Verriegelungsbolzen abstützt und dadurch ein Hindurchziehen des Endes des Zugstrangs mit der Verdickung verhindert. Zusätzlich weist das Haltemittel eine Raste auf, die bevorzugt einstückig mit der Scheibe verbunden ist. Diese Raste korrespondiert derart mit der eine Verdickung auf dem Betätigungsseil bildenden Presshülse, dass das Haltemittel mit der Raste auf der Presshülse durch Festrasten arretiert ist und dadurch die Scheibe auf dem Zugstrang zwischen der Presshülse und der Lasche am Verriegelungsbolzen hält. Durch einfaches Abziehen der Raste von der Presshülse kann zum Austausch des Zugstrangs das Haltemittel vom Betätigungsmittel, insbesondere dem Zugstrang, gelöst werden. Die Presshülse am Ende des Zugstrangs ist dann durch die entsprechend groß bemessene Durchgangsbohrung in der Lasche des Verriegelungsbolzens hindurchziehbar, ebenso ist die Presshülse auf dem Ende eines neuen Betätigungsmittels, insbesondere Zugstrangs, durch die Durchgangsbohrung in der Lasche des Verriegelungsbolzens hindurchsteckbar.

Zwei bevorzugte Ausführungsbeispiele des erfindungsgemäßen Kuppelstücks werden nachfolgend anhand der Zeichnung näher erläutert. In dieser zeigen:
- Fig. 1: eine Seitenansicht des erfindungsgemäßen Kuppelstücks,
- Fig. 2: eine um 90° gegenüber der Fig. 1 gedrehte Seitenansicht des Kuppelstücks im teilweise geschnittenen Zustand,
- Fig. 3: eine Draufsicht auf das Kuppelstück der Fig. 2 im teilweise geschnittenen Zustand,
- Fig. 4: eine Einzelheit IV aus der Darstellung der Fig. 2,
- Fig. 5: eine Einzelheit V der Fig. 3, und
- Fig. 6: einen Querschnitt durch ein Kuppelstück nach einem zweiten Ausführungsbeispiel der Erfindung.

Bei den gezeigten Kuppelstücken beider Ausführungsbeispiele handelt es sich um sogenannte Semiautomatik-Twistlocks zum halbautomatischen Verbinden aufeinandergestapelter Container, die in den Figuren nicht dargestellt sind. Die Kuppelstücke verriegeln nach dem Aufeinandersetzen der zu verbindenden Container automatisch. Nur das Entriegeln der Kuppelstücke erfolgt manuell.

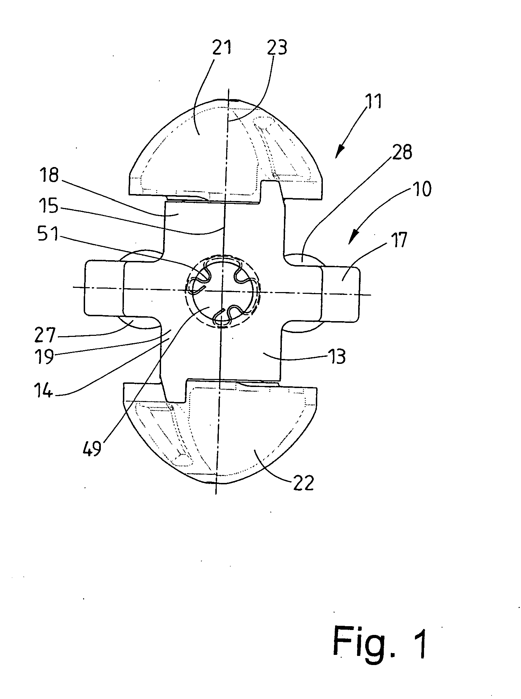

Die Fig. 1 bis 5 zeigen ein halbautomatisches Kuppelstück, das sich im Wesentlichen aus einem Gehäuse 10, einem Verriegelungsbolzen 11 und zwei im vorliegenden Ausführungsbeispiel gleich ausgebildete Betätigungsmittel 12 zusammensetzt.

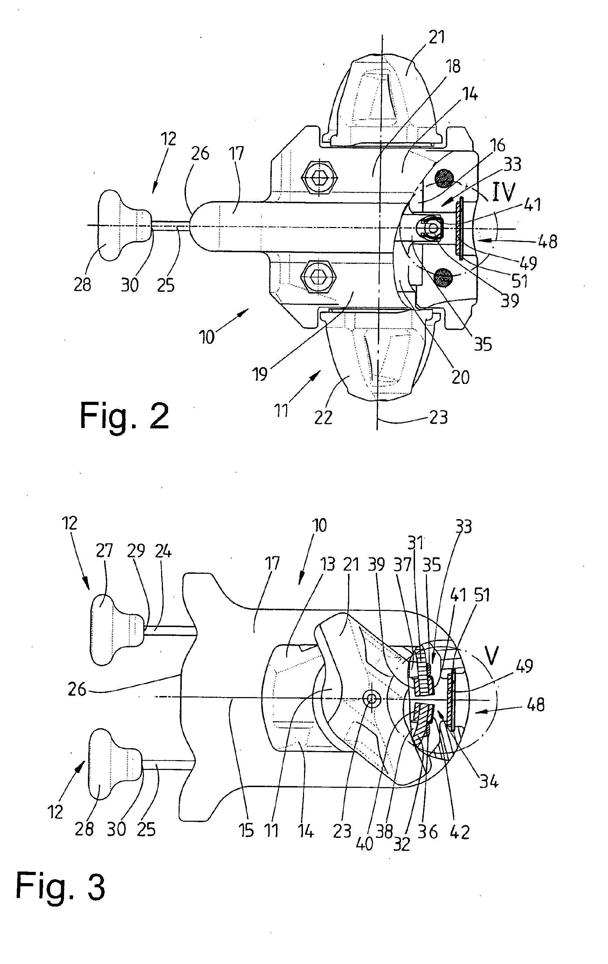

Das Gehäuse 10 des hier gezeigten Kuppelstücks ist zweiteilig ausgebildet. Es besteht aus zwei Gehäusehälften 13 und 14, die in einer mittigen Teilungsebene 15 miteinander verschraubt sind. Die Teilungsebene 15 verläuft längs durch die Mitte einer Durchgangsbohrung 16 im Gehäuse 10. Außerdem verläuft die Teilungsebene 15 bezogen auf die in den Fig. 1 und 2 gezeigte Gebrauchsstellung des Kuppelstücks vertikal durch das Gehäuse 10.

Das Äußere des Gehäuses 10 ist unterteilt in drei Abschnitte, nämlich ein mittiges Widerlager 17, das bei aufeinander gestapelten Containern zwischen benachbarten Eckbeschlägen der nicht gezeigten Container als Abstandshalter zu liegen kommt und zwei auf gegenüberliegenden Seiten des Widerlagers 17 angeordnete Mittelstück 18 und 19. An der Stelle des in den Figuren gezeigten plattenartigen Widerlagers 17, das die übereinander gestapelten Container beabstandet, ist auch ein aus kleinen Wülsten mit vorzugsweise dreieckigem Querschnitt gebildetes Widerlager denkbar. Diese Wülste sind so bemessen, dass sie das Kuppelstück mittig zwischen übereinander gestapelten Containern zentrieren, aber die übereinander gestapelten Container an ihren Eckbeschlägen nicht voneinander beabstanden. Die aus Wülsten gebildeten Widerlager liegen vielmehr in Fasen an den Kanten der Langlöcher in den Eckbeschlägen der übereinander zu stapelnden Container. Die Mittelstücke 18 und 19 ragen bei zusammengekuppelten Containern in entsprechende Langlöcher der Eckbeschläge übereinanderliegender Container hinein.

Der Verriegelungsbolzen 11 setzt sich zusammen aus einem im Wesentlichen zylindrischen Mittelteil 20 und zwei Querriegeln 21 und 22. Der Verriegelungsbolzen 11 ist einstückig ausgebildet, wozu die Querriegel 21 und 22 an gegenüberliegenden Enden des Mittelteils 20 angeformt sind. Mit dem Mittelteil 20 ist der Verriegelungsbolzen 11 in der Durchgangsbohrung 16 des Gehäuses 10 um seine Längsmittelachse 23 drehbar gelagert. Die beiden Querriegel 21 und 22 ragen aus gegenüberliegenden Enden des Gehäuses 10 heraus. Die Querriegel 21 und 22 befinden sich dadurch oberhalb bzw. unterhalb des jeweiligen Mittelstücks 18 und 19 des Gehäuses 10.

Die beiden Querriegel 21 und 22 des Verriegelungsbolzens 11 sind bevorzugt im Wesentlichen gleich ausgebildet. Sie können auch unterschiedliche Gestaltungen aufweisen. Jeder Querriegel 21 und 22 verfügt im gezeigten Ausführungsbeispiel an seiner zum jeweiligen Mittelstück 18 bzw. 19 des Gehäuses 10 weisenden Rückseite über eine rautenartige, nahezu rechteckige Grundfläche. Von der Rückseite ausgehend verjüngt sich jeder Querriegel 21 und 22 konusförmig zu seinem freien Ende. Von der Seite gesehen verfügt dadurch jeder Querriegel 21, 22 über eine pilzähnliche Gestalt.

Die Querriegel 21 und 22 verfügen über eine von der Rückseite zur Oberseite verlaufende Wendelung. Diese Wendelung ist so ausgebildet, dass die Querriegel 21 und 22 beim Einsetzen in die Eckbeschläge der zu verbindenden Container selbsttätig verdreht werden und dadurch die automatische Verriegelung des Kuppelstücks bei aufeinandergesetzten Containern herbeigeführt wird.

Die beiden gleich ausgebildeten Betätigungsmittel verlaufen mittig durch das Widerlager 17, befinden sich also in einer Ebene, die senkrecht zur Teilungsebene 15 des Gehäuses 10 verläuft (Fig. 2 und 3). Die beiden Betätigungsmittel 12 sind auf gegenüberliegenden Seiten der Teilungsebene 15 angeordnet, und zwar symmetrisch bezogen auf die Teilungsebene 15. Jedes Betätigungsmittel 12 verfügt über einen biegeelastischen bzw. biegeschlaffen Zugstrang 24, 25. Jeder Zugstrang 24, 25 ist bevorzugt aus einem Seil (zum Beispiel einem Drahtseil) gebildet. Die Zugstränge 24 und 25 ragen mit einem äußeren Endbereich aus einer hinteren Seitenfläche 26 des Widerlagers 17 heraus. Auf den Enden 29, 30 dieser aus dem Widerlager 17 herausragenden Zugstränge 24 und 25 sind Handgriffe 27 bzw. 28 angeordnet. Ein sich im Inneren des Gehäuses befindendes Ende 31, 32 jedes Betätigungsmittels 12, nämlich jedes Zugstrangs 24 und 25, ist mit dem Verriegelungsbolzen 11 verbunden, und zwar dem in der Durchgangsbohrung 16 des Gehäuses 10 gelagerten Mittelteils 20 des Verriegelungsbolzens 11. Erfindungsgemäß erfolgt diese Verbindung jedes Betätigungsmittels 12 mit dem Verriegelungsbolzen 11 lösbar. Lösbar bedeutet in diesem Zusammenhang, dass zum Austauschen eines Betätigungsmittels 12, insbesondere eines Zugstrangs 24 bzw. 25, keine zerstörenden Maßnahmen zum Lösen des Zugstrangs 24, 25 vom Mittelteil 20 des Verriegelungsbolzens 10 erforderlich sind und nach dem Montieren eines neuen Zugstrangs 24, 25 keine unlösbare Verbindung zwischen dem Zugstrang 24, 25 und dem Mittelteil 20 des Verriegelungsbolzens 10 herzustellen ist.

Jedes im Inneren des Gehäuses liegende (innere) Ende 31 und 32 des Zugstrangs 24 und 25 ist an einer eigenen Verbindungsstelle 33, 34 mit dem Mittelteil 20 des Verriegelungsbolzens 11 lösbar verbunden. Im Bereich jeder Verbindungsstelle 33, 34 weist das Mittelteil 20 des Verbindungsbolzens 11 einen laschen- bzw. zungenartigen Vorsprung 35, 36 auf. Die gleich ausgebildeten Vorsprünge 35, 36 sind dichtestmöglich nebeneinanderliegend am Mittelteil 20 des Verriegelungsbolzens 11 angeordnet, und zwar so, dass die Zugstränge 24 und 25 von entgegengesetzten äußeren Seiten durch den jeweiligen Vorsprung 35, 36 hindurchsteckbar sind und die inneren Enden 31, 32 beider Zugstränge 24 und 25 zwischen den benachbarten Vorsprüngen 35 und 36 zu liegen kommen (Fig. 3). In jedem Vorsprung 35 und 36 ist ein vorzugsweise gleich großer Durchbruch vorgesehen. Im gezeigten Ausführungsbeispiel handelt es sich bei jedem Durchbruch um eine Durchgangsbohrung 37 bzw. 38.

Auf das Ende 31, 32 jedes Zugstrangs 24, 25 ist eine Verdickung aufgebracht. Bei der Verdickung handelt es sich beim gezeigten Kuppelstück jeweils um eine Presshülse 39, 40. Jede der gleich ausgebildeten zylindrischen Presshülsen 39 und 40 ist dauerhaft auf ein inneres Ende 31 und 32 des jeweiligen Zugstrangs 24 und 25 aufgebracht. Die Außendurchmesser der Presshülsen 39 und 40 korrespondieren derart zum Innendurchmesser der jeweiligen Durchgangsbohrung 37, 38 im Vorsprung 35 bzw. 36, dass mit geringfügigem Spiel das innenliegende Ende 31 und 32 jedes Zugstrangs 24 und 25 mit der Presshülse 39, 40 durch die Durchgangsbohrung 37 und 38 des jeweiligen Vorsprungs 35, 36 hindurchsteckbar ist.

Zur Sicherung der lösbaren Verbindung jedes Zugstrangs 24 und 25 mit dem Vorsprung 35, 36 am Verriegelungsbolzen 11 ist jeder Verbindungsstelle 33, 34 ein Haltemittel 41, 42 zugeordnet. Die Haltemittel 41, 42 beider Verbindungsstellen 33 und 34 sind gleichermaßen lösbar ausgebildet. Dazu verfügt jedes der gleichen Haltemittel 41 und 42 über eine Scheibe 43 und eine Raste 44, die bevorzugt einstückig miteinander verbunden sind. Beispielsweise sind die Scheibe 43 und die Raste 44 jedes Haltemittels 41 und 42 aus Kunststoff in einem Stück hergestellt. Die Haltemittel 41 und 42 können aber auch aus einem anderen Material, beispielsweise Blech, gebildet sein. Infolge der Rasten 44 sind die Haltemittel 41 und 42 leicht lösbar, nämlich rastend bzw. klemmend, mit dem jeweiligen inneren Ende 31 und 32 des Zugstrangs 24 und 25 verbindbar.

Die Scheibe 43 jedes Haltemittels 41, 42 weist Außenabmessungen auf, die größer sind als die Durchgangsbohrung 37, 38 im jeweiligen zungenartigen Vorsprung 35, 36 am Mittelteil 20 des Verriegelungsbolzens 11. Auf diese Weise verhindern die Haltemittel 41 und 42 ein Zurückziehen des inneren Endes 31, 32 des jeweiligen Zugstrangs 24, 25 durch die Durchgangsbohrung 37, 38 im Vorsprung 35 und 36 am Verriegelungsbolzen 11. Das Haltemittel 41 und 42 ist mit der Scheibe 43 quer zur Längsachse auf den jeweiligen Zugstrang 24 und 25 vor der darauf befestigten Presshülse 39, 40 aufsetzbar. Dazu verfügt die Scheibe 43 über einen einseitig offenen Schlitz 45, dessen Breite etwas größer als der Durchmesser des jeweiligen Zugstrangs 24 bzw. 25 ist. Der jeweilige Schlitz 45 erstreckt sich bis etwa über die Mitte der Scheibe 43, vorzugsweise um die Hälfte des Durchmessers des Zugstrangs 24, 25 über dieselbe hinaus.

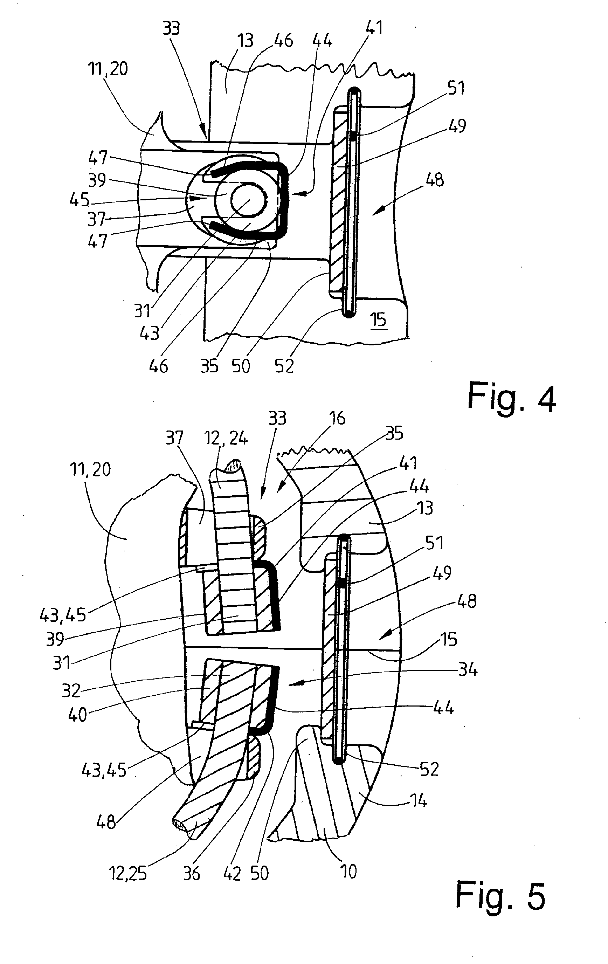

Die an die jeweilige Scheibe 43 angeformte Raste 44 jedes Haltemittels 41, 42 ist etwa U-förmig ausgebildet und dadurch einseitig offen. Die beiden Schenkel 46 der Raste 44 verlaufen zu ihren freien Enden 47 hin divergierend. Der Abstand zwischen den beiden Schenkeln 46 verringert sich dadurch zu den freien Enden 47 hin. Dieser Abstand ist korrespondierend zum Außendurchmesser der jeweiligen Presshülse 39, 40 auf dem inneren Ende 31, 32 jedes Zugstrangs 24, 25 bemessen. Der Abstand auf halber Länge zwischen den beiden Schenkeln 46 entspricht dabei etwa dem Durchmesser der Presshülsen 39, 40. Hingegen ist der Abstand zwischen den freien Enden 47 der Schenkel 46 kleiner als der Durchmesser der Presshülsen 39, 40 ausgebildet (Fig. 4). Dadurch lassen sich die Rasten 44 der Haltemittel 41, 42 auf die jeweilige Presshülse 39, 40 aufstecken, wobei die Schenkel 46 etwas auseinandergebogen werden, wenn ihre freien Enden 47 die dicksten Stellen der zylindrischen Presse passieren. Nachdem die Rasten 44 auf die Presshülse 39 und 40 aufgesteckt sind, federn die Schenkel 46 wieder zusammen, wodurch die Haltemittel 41 und 42 mit den Rasten 44 klemmend auf den Presshülsen 39 und 40 gehalten werden.

Das Gehäuse 10 weist eine Öffnung 48 auf. Im gezeigten Ausführungsbeispiel ist das Gehäuse 10 mit einer einzigen Öffnung 48 versehen. Es ist aber auch denkbar, dem Gehäuse 10 mehrere Öffnungen 48 zuzuordnen. Die Öffnung 48 ist der den Handgriffen 27 und 28 der Betätigungsmittel 12 gegenüberliegenden Rückseite des Gehäuses 10 zugeordnet. Die Öffnung 48 liegt dabei auf der Mitte der Rückseite des Gehäuses 10, nämlich dort, wo die Teilungsebene 15 und eine Mittelebene des Widerlagers 17 sich kreuzen (Fig. 1). Die Öffnung 48 ist beim hier gezeigten Ausführungsbeispiel mit einem kreisrunden Querschnitt versehen. Die Öffnung 48 befindet sich dort, wo in einer definierten Stellung des Kuppelstücks, beispielsweise in der entriegelten Stellung, sich die beiden Verbindungsstellen 33, 34 befinden, womit die Enden 31 und 32 der Zugstränge 24 und 25 lösbar befestigt sind.

Die Öffnung 48 dient dazu, von der Außenseite des Gehäuses 10 her die Verbindungen der Zugstränge 24 und 25 mit dem Verriegelungsbolzen 11 zu lösen und wieder herzustellen. Dazu sind im gezeigten Ausführungsbeispiel beide Verbindungsstellen 33, 34 durch die Öffnung 48 hindurch von der Außenseite des Gehäuses 10 zugänglich.

Die Öffnung 48 ist verschließbar. Dazu dient eine Scheibe 49, die bei verschlossener Öffnung 48 vor einem umlaufenden Kragen 50 an der Innenseite der Öffnung 48 anliegt. Gehalten wird die Scheibe 49 in der Öffnung 48 durch einen Federring 51, der in einer Nut 52 in der Öffnung 48 einrastbar ist. Die Nut 52 befindet sich auf der dem Kragen 50 gegenüberliegenden äußeren Seite der Scheibe 49. Durch Entfernen des Federrings 51 von der Außenseite des Gehäuses 10 kann die Scheibe 49 entfernt werden, wodurch die Öffnung 48 zum Austauschen eines Betätigungsmittels von der Außenseite des Gehäuses 10 zugänglich ist.

Der Austausch eines defekten Betätigungsmittels, nämlich des Zugstrangs 24 bzw. 25, erfolgt beim zuvor beschriebenen Kuppelstück folgendermaßen:

Zunächst wird der Federring 51 aus der Nut 52 gelöst. Dann wird die Scheibe 49 aus der Öffnung 48 herausgenommen. Durch die nunmehr freie Öffnung 48 erfolgt von der Außenseite des Gehäuses 10, wenn beispielsweise der defekte Zugstrang 24 ausgetauscht werden soll, ein Lösen des Haltemittels 41, indem die Raste 44 desselben von der Presshülse 39 am inneren Ende 31 des Zugstrangs 24 abgezogen wird. Durch die Öffnung 48 hindurch wird das Haltemittel 41 aus dem Gehäuse 10 herausgenommen. Nunmehr kann die Presshülse 39 durch die Durchgangsbohrung 37 im seitlich abstehenden Vorsprung 35 am Mittelteil 20 des Verriegelungsbolzens 10 geschoben werden. Dadurch ist die Verbindung an der Verbindungsstelle 33 gelöst und es kann der defekte Zugstrang 24 durch Ziehen am Handgriff 27 aus dem Gehäuse 10 herausgezogen werden.

Ein neuer Zugstrang 24 wird nun mit vorher außerhalb des Gehäuses 10 auf sein Ende 31 aufgebrachter Presshülse 39 von der Seitenfläche 26 des Widerlagers 17 des Gehäuses 10 aus in das Gehäuse 10 geschoben. Durch die Öffnung 48 hindurch kann das innere Ende 31 des Zugstrangs 24 so geführt werden, dass die Presshülse 39 auf dem inneren Ende 31 des Zugstrangs 24 durch die Durchgangsbohrung 37 im Vorsprung 35 gelangt. Danach wird wieder das Haltemittel 41 auf die Presshülse 39 aufgesteckt. Es kann sich dabei um das zuvor demontierte Haltemittel 41, aber auch um ein neues Haltemittel handeln. Die Scheibe 43 liegt bei auf der Pressehülse 39 mit der Raste 44 aufgerastetem Haltemittel 41 zwischen dem zum Vorsprung 35 weisenden Ende der Presshülse 39 und dem Vorsprung 35. Die Scheibe 43 des Haltemittels 41 verhindert dadurch, dass beim Ziehen am Handgriff 27 der Zugstrang 24 durch die Durchgangsbohrung 37 hindurchrutscht. Auf diese Weise kommt an der Verbindungsstelle 33 eine lösbare Verbindung des inneren Endes 31 des Zugstrangs 24 mit dem Verriegelungsbolzen 11 zustande.

In der vorstehend beschriebenen Weise kann auch der Zugstrang 25 des anderen (zweiten) Betätigungsmittels 12 gewechselt werden, wenn das erforderlich werden sollte.

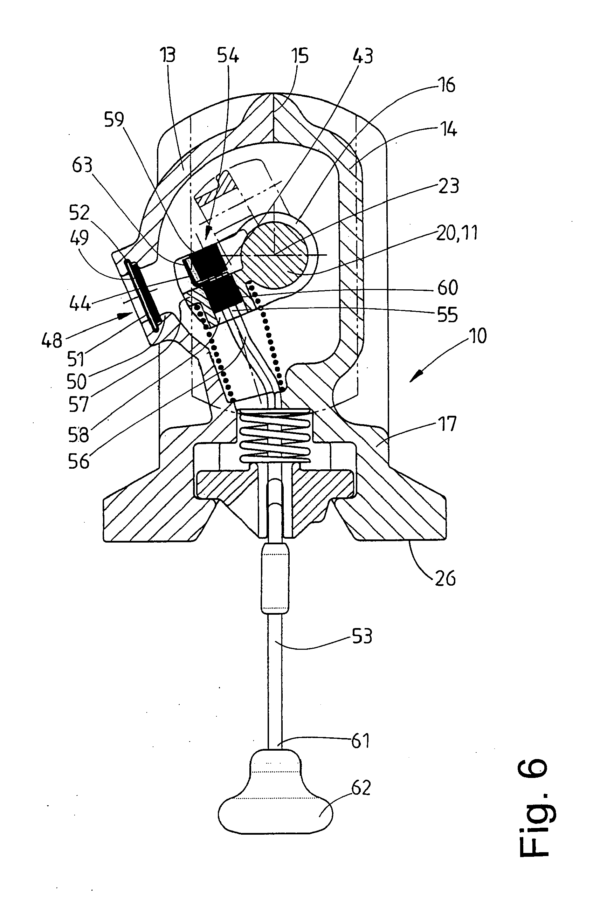

Beim in der Fig. 6 gezeigten zweiten Ausführungsbeispiel der Erfindung handelt es sich ebenfalls um ein halbautomatisches Kuppelstück. Dieses unterscheidet sich vom zuvor beschriebenen Kuppelstück im Wesentlichen nur dadurch, dass lediglich ein einziges Betätigungsmittel 53 vorhanden ist. Außerdem ist die eine Verbindungsstelle 54 eines im Inneren des Gehäuses 10 liegenden Endes 55 eines Zugstrangs 56 zur Bildung des Betätigungsmittels 53 etwas anders ausgebildet als beim Ausführungsbeispiel der Fig. 1 bis 5. Im Übrigen gleicht das Kuppelstück der Fig. 6 dem Kuppelstück des ersten Ausführungsbeispiels der Fig. 1 bis 5, weswegen für gleiche Teile gleiche Bezugsziffern verwendet werden.

Das Mittelteil 20 des Verriegelungsbolzens 11 ist beim Kuppelstück der Fig. 6 mit nur einem einzigen seitlich abstehenden, zungenartigen Vorsprung 57 versehen, der eine Durchgangsbohrung 58 aufweist.

Dem Bereich des innenliegenden Endes 55 des Zugstrangs 56 sind beim Kuppelstück der Fig. 6 zwei geringfügig voneinander beabstandete Presshülsen 59 und 60 zugeordnet. Beide Presshülsen 59 und 60 sind gleich bemessen, verfügen insbesondere über den gleichen Außendurchmesser. Die Durchgangsbohrung 58 im Vorsprung 57 des Verriegelungsbolzens 11 weist einen Durchmesser auf, der etwas größer als der Außendurchmesser der Presshülse 59 und 60. Die Presshülsen 59 und 60 auf dem innenliegenden Ende 55 des Zugstrangs 56 sind auf diese Weise durch die Durchgangsbohrung 58 im Vorsprung 57 am Verriegelungsbolzen 11 hindurchsteckbar. Dabei liegt die zum äußeren Ende 61 mit einem Handgriff 62 weisende Presshülse 60 beim mit dem Verriegelungsbolzen 11 verbundenen Zugstrang 56 in der Durchgangsbohrung 58 des Vorsprungs 57, wodurch das Ende 55 des Zugstrangs 56 mittig in der Durchgangsbohrung 58 gehalten wird.

Das Haltemittel 63 ist beim gezeigten Kuppelstück genauso ausgebildet wie das Haltemittel 41 bzw. 42 des zuvor beschriebenen Kuppelstücks. Auch das Haltemittel 63 besteht aus einer Scheibe 43 und einer damit einstückig verbundenen Raste 44. Der Abstand zwischen den beiden Presshülsen 59 und 60 auf dem inneren Ende 55 des Zugstrangs 56 ist derart bemessen, dass die Scheibe 43 des Haltemittels 63 mit geringem Spiel zwischen den beiden Presshülsen 59 und 60 auf das Seil zur Bildung des Zugstrangs 56 aufschiebbar ist. Auch das Haltemittel 63 verhindert nach dem Aufstecken der Raste 44 desselben auf die dem inneren Ende 55 des Zugstrangs 56 zugewandte Presshülse 59 das Hindurchziehen der Presshülse 59 durch die Durchgangsbohrung 58 im Vorsprung 57 am Verriegelungsbolzen 11.

Beim Kuppelstück der Fig. 6 weist das Gehäuse auch eine Öffnung 48 auf, die durch eine lösbare Scheibe 49 oder dergleichen verschließbar ist. Die Öffnung 48 befindet sich an solcher Stelle des Gehäuses 10, die in einer bestimmten Stellung des Verriegelungsbolzens 11, insbesondere in der entriegelten Stellung, der Verbindungsstelle 54 möglichst nahe liegt, damit durch die Öffnung 48 hindurch von der Außenseite des Gehäuses 10 ein Demontieren und ein Montieren des Zugstrangs 56 mit dem Verriegelungsbolzen 11 erfolgen kann.

Das Montieren und Demontieren des Betätigungsmittels 53 des in der Fig. 6 gezeigten Kuppelstücks erfolgt genauso wie das Auswechseln des Betätigungsmittels 12 des Kuppelstücks der Fig. 1 bis 5, weil auch an der Verbindungsstelle 54 das Betätigungsmittel 53 lösbar mit dem Vorsprung 57 des Verriegelungsbolzens 11 verbundnen ist.

Die Erfindung eignet sich auch für andere Kuppelstücke zum Verbinden übereinander gestapelter Container an Bord von Schiffen oder anderen Fahrzeugen, die nicht halbautomatisch arbeiten. Außerdem können die Haltemittel abweichend von den gezeigten Haltemitteln 41, 42 und 63 ausgebildet sein. Entscheidend ist, dass diese eine lösbare Verbindung des Betätigungsmittels 12 bzw. 53 mit dem Verriegelungsbolzen 11 von der Außenseite des Gehäuses 10 her ermöglichen.

Denkbar ist es auch, dass die Öffnung 48 zum Zugang zur Verbindungsstelle 33, 34 bzw. 54 ständig offen bleibt, also nicht durch eine Scheibe 49 oder dergleichen verschließbar ist.

### Bezugszeichenliste:

- 10: Gehäuse
- 11: Verriegelungsbolzen
- 12: Betätigungsmittel
- 13: Gehäusehälfte
- 14: Gehäusehälfte
- 15: Teilungsebene
- 16: Durchgangsbohrung
- 17: Widerlager
- 18: Mittelstück
- 19: Mittelstück
- 20: Mittelteil
- 21: Querriegel
- 22: Querriegel
- 23: Längsmittelachse
- 24: Zugstrang
- 25: Zugstrang
- 26: Seitenfläche
- 27: Handgriff
- 28: Handgriff
- 29: Ende (außen)
- 30: Ende (außen)
- 31: Ende (innen)
- 32: Ende (innen)
- 33: Verbindungsstelle
- 34: Verbindungsstelle
- 35: Vorsprung
- 36: Vorsprung
- 37: Durchgangsbohrung
- 38: Durchgangsbohrung
- 39: Presshülse
- 40: Presshülse
- 41: Haltemittel
- 42: Haltemittel
- 43: Scheibe
- 44: Raste
- 45: Schlitz
- 46: Schenkel
- 47: freies Ende
- 48: Öffnung
- 49: Scheibe
- 50: Kragen
- 51: Federring
- 52: Nut
- 53: Betätigungsmittel
- 54: Verbindungsstelle
- 55: Ende (innen)
- 56: Zugstrang
- 57: Vorsprung
- 58: Durchgangsbohrung
- 59: Presshülse
- 60: Presshülse
- 61: Ende (außen)
- 62: Handgriff
- 63: Haltemittel

## Patentansprüche

1. Kuppelstück zum lösbaren Verbinden von Containern, insbesondere an Bord von Schiffen, mit einem Gehäuse (10), einem drehbar im Gehäuse (10) gelagerten Verriegelungsbolzen (11) und mit mindestens einem am Verriegelungsbolzen (11) befestigten Betätigungsmittel (12; 53), **dadurch gekennzeichnet, dass** das oder jedes Betätigungsmittel (12; 53) lösbar mit dem Verriegelungsbolzen (11) verbunden ist.

2. Kuppelstück nach Anspruch 1, **dadurch gekennzeichnet, dass** der lösbaren Verbindung zwischen dem Verriegelungsbolzen (11) und dem jeweiligen Betätigungsmittel (12; 53) mindestens ein Haltemittel (41, 42; 63) zugeordnet ist.

3. Kuppelstück nach Anspruch 1 oder 2, **dadurch gekennzeichnet, dass** das oder jedes Haltemittel (41, 42; 63) rastend ausgebildet ist.

4. Kuppelstück nach einem der vorhergehenden Ansprüche, **dadurch gekennzeichnet, dass** bei mehreren, vorzugsweise zwei, Betätigungsmitteln (12) zwischen dem Verriegelungsbolzen (11) und jedem Betätigungsmittel (12) ein lösbares Haltemittel (41, 42) angeordnet ist.

5. Kuppelstück nach einem der vorhergehenden Ansprüche, **dadurch gekennzeichnet, dass** im Gehäuse (10) mindestens eine Öffnung (48) angeordnet ist zum Herstellen und Lösen der Verbindung zwischen dem jeweiligen Betätigungsmittel (12; 53) und dem Verriegelungsbolzen (11).

6. Kuppelstück nach einem der vorhergehenden Ansprüche, **dadurch gekennzeichnet, dass** die mindestens eine Öffnung (48) verschließbar ist, vorzugsweise durch einen wiederverwendbaren Verschluss.

7. Kuppelstück nach einem der vorhergehenden Ansprüche, **dadurch gekennzeichnet, dass** der Verriegelungsbolzen (12) an einem drehbar im Gehäuse (10) gelagerten Mitteilteil (20) mindestens einen seitlich abstehenden Vorsprung (35, 36; 57) für das oder jedes Betätigungsmittel (12; 53) aufweist, wobei der jeweilige Vorsprung (35, 36; 57) einen Durchbruch zum Hindurchstecken mindestens einer Verdickung an einem Ende (30, 31; 55) bzw. Endbereich des jeweiligen Betätigungsmittels (12; 53) aufweist.

8. Kuppelstück nach Anspruch 7, **dadurch gekennzeichnet, dass** die mindestens eine Verdickung des jeweiligen Betätigungsmittels (12; 53) mit dem Haltemittel (41, 42; 63) korrespondiert, vorzugsweise derart, dass nach dem Montieren des Haltemittels (41, 42; 63) die Verdickung des Betätigungsmittels (12; 53) durch den Durchbruch im betreffenden Vorsprung (35, 36; 57) nicht mehr hindurchschiebbar ist.

9. Kuppelstück nach einem der vorhergehenden Ansprüche, **dadurch gekennzeichnet, dass** das Haltemittel (41, 42; 63) im montierten Zustand auf oder an der mindestens einen Verdickung des Betätigungsmittels (12;53) festrastbar bzw. festklemmbar ist.

10. Kuppelstück nach einem der vorhergehenden Ansprüche, **dadurch gekennzeichnet, dass** das oder jedes Betätigungsmittel (12; 53) einen vorzugsweise aus einem Seil gebildeten Zugstrang (24, 25; 56) aufweist und die Verdickung am Ende (30, 31; 55) oder im Endbereich des Zugstrangs (24, 25; 56) als mindestens eine unlösbar auf das Ende (30, 31; 55) oder den Endbereich des Zugstrangs (24, 25; 56) aufgepresste Presshülse (39, 40; 59, 60) ausgebildet ist.

11. Kuppelstück nach einem der vorhergehenden Ansprüche, **dadurch gekennzeichnet, dass** das Haltemittel (41, 42; 63) eine einseitig offene, vorzugsweise einen Schlitz (45) aufweisende, Scheibe (43) mit einem Außendurchmesser, der größer ist als der Durchbruch im Vorsprung (35, 36; 57) des Verriegelungsbolzens (11) und eine mit der Scheibe (43) verbundene Raste (44) gebildet ist, die vorzugsweise mit einer Presshülse (39, 40; 59) korrespondiert, insbesondere auf die jeweilige Presshülse (39, 40; 59) durch Aufrasten oder Aufklemmen sich lösbar befestigen lässt.

12. Kuppelstück nach einem der vorhergehenden Ansprüche, **dadurch gekennzeichnet, dass** ein innenliegendes Ende (55) des Zugstrangs (56) mit zwei voneinander beabstandeten Presshülsen (59, 60) versehen ist, wobei zwischen den Presshülsen (59, 60) die Scheibe (43) des Haltemittels (63) Aufnahme findet.

13. Kuppelstück nach einem der vorhergehenden Ansprüche, **dadurch gekennzeichnet, dass** der Durchbruch in dem oder jedem Vorsprung (35, 36; 57) am Verriegelungsbolzen (11) als Durchgangsbohrung (37, 38; 58) ausgebildet ist, die im (Innen-)Durchmesser geringfügig größer ist als der Außendurchmesser jeder Presshülse (39, 40; 59, 60) auf dem jeweiligen Zugstrang (24, 25; 56) zur Bildung eines Betätigungsmittels (12; 53).
